# EUROPEAN PATENT APPLICATION

(11) **EP 1 884 843 A2**
(43) Date of publication of application: **06.02.2008**
(21) Application number: 07012570.3
(22) Date of filing: 27.06.2007
(51) Int. Cl.: G04G 17/08, G04G 1/06, H04B 1/38, G04B 37/00, G04G 1/02

(54) **Watch-type portable terminal**

(30) Priority: 31.07.2006 KR 20060072081
(71) Applicant: Samsung Electronics Co., Ltd., Suwon-si, Gyeonggi-Do (KR)
(72) Inventor: Kim, Ki-Bum, Suwon-si, Gyeonggi-do (KR); Bae, Kwang-Jin, Suwon-si, Gyeonggi-do (KR)
(74) Representative: Lang, Johannes

(57) **Abstract**

A watch-type portable terminal includes a first housing and wrist bands extending from both ends of the first housing. The watch-type portable terminal includes a second housing rotatably combined with the first housing in a direction to be folded down or away from the first housing while facing the first housing. Display devices are installed on at least one face of the second housing.

## Description

### BACKGROUND OF THE INVENTION

### 1. Field of the Invention

The present invention generally relates to a portable terminal. More particularly, the present invention relates to a watch-type portable terminal that is wearable on a body like a wrist.

### 2. Description of the Related Art

Generally, portable terminals can be classified into bar-type terminals, flip-type terminals, and folder-type terminals according to their appearance.

The bar-type terminal has a single housing in which data input/output means, a transmitting unit (or mouthpiece), and a receiving unit (or earpiece) are mounted. Because a keypad as a data input means is exposed at all times, the bar-type terminal is likely to malfunction. Moreover, there is a limitation on miniaturization of the bar-type terminal because a sufficient distance should be maintained between the transmitting unit and the receiving unit.

The flip-type terminal includes a main body, a flip, and a hinge module that combines the main body with the flip. In the flip-type terminal, data input/output means, the transmitting unit, and the receiving unit are mounted in the main body. Malfunctioning can be prevented by the flip that covers a keypad that serves as a data input means. However, there is also a limitation on miniaturization of the flip-type terminal because a sufficient distance should be maintained between the transmitting unit and the receiving unit.

The folder-type terminal includes a main body, a folder, and a hinge module that rotatably combines the main body with the folder. The folder is opened and closed by rotation. When the folder is folded on the main body, it is possible to prevent a keypad from malfunctioning through a call wait mode. When the folder is opened in a call mode, a sufficient distance can be secured between the transmitting unit and the receiving unit, contributing to miniaturization of the terminal. For these reasons, folder-type terminals have become mainstream portable terminals.

With the diversification of the designs of portable terminals, sliding-type terminals having two housings, one of which is opened by sliding on the other, popup-type terminals, and swing-type terminals have gradually come into wide use. As portable terminals tend towards miniaturization and being lightweight, watch-type portable terminals wearable on a user's wrist have been developed.

Korean Patent No. 313,145 filed by and granted to the present applicant on October 16, 2001 (U.S Patent No. 6,549,791, which issued April 15, 2003) discloses a watch-type portable terminal. In the disclosed watch-type portable terminal, a main body and a battery pack holder are connected by a hinge device to allow the portable terminal to adhere closely to a wrist and bands are attached to the main body and the battery pack holder to allow wrist wearing.

However, in a conventional watch-type portable terminal, components, such as a data input device, a data output device, and an antenna device, are mounted in a single housing, resulting in a limitation in the diversification of the functions of the portable terminal.

Accordingly, a need exists for an improved watch-type portable terminal having increased functionality.

### SUMMARY OF THE INVENTION

It is, therefore, an object of the present invention to provide a watch-type mobile terminal capable of having various functions.

According to one aspect of the present invention, there is provided a watch-type portable terminal including a first housing and wrist bands extending from both ends of the first housing. The watch-type portable terminal includes a second housing rotatably combined with the first housing in a direction to be folded down or away from the first housing while facing the first housing, and display devices installed on at least one face of the second housing.

Other objects, advantages and salient features of the invention will become apparent from the following detailed description, which, taken in conjunction with the annexed drawings, discloses exemplary embodiments of the invention.

### BRIEF DESCRIPTION OF THE DRAWINGS

The above and other objects, features and advantages of the present invention will become more apparent from the following detailed description when taken in conjunction with the accompanying drawings, in which:
FIG. 1 is a perspective view of an opened state of a watch-type portable terminal according to an exemplary embodiment of the present invention;
FIG. 2 is a perspective view of the watch-type portable terminal of FIG. I viewed from the other side;
FIG. 3 is a top plan view of a closed state of the watch-type portable terminal of FIG. 1;
FIG. 4 is a side elevational view of the watch-type portable terminal of FIG. 3; and
FIG. 5 is an exploded perspective view of a hinge device of the watch-type portable terminal of FIG. 1.

Throughout the drawings, like reference numerals will be understood to refer to like parts, components and structures.

### DETAILED DESCRIPTION OF EMBODIMENTS

An exemplary embodiment of the present invention is described in detail with reference to the annexed drawings. In the following description, a detailed description of known functions and configurations incorporated herein has been omitted for conciseness.

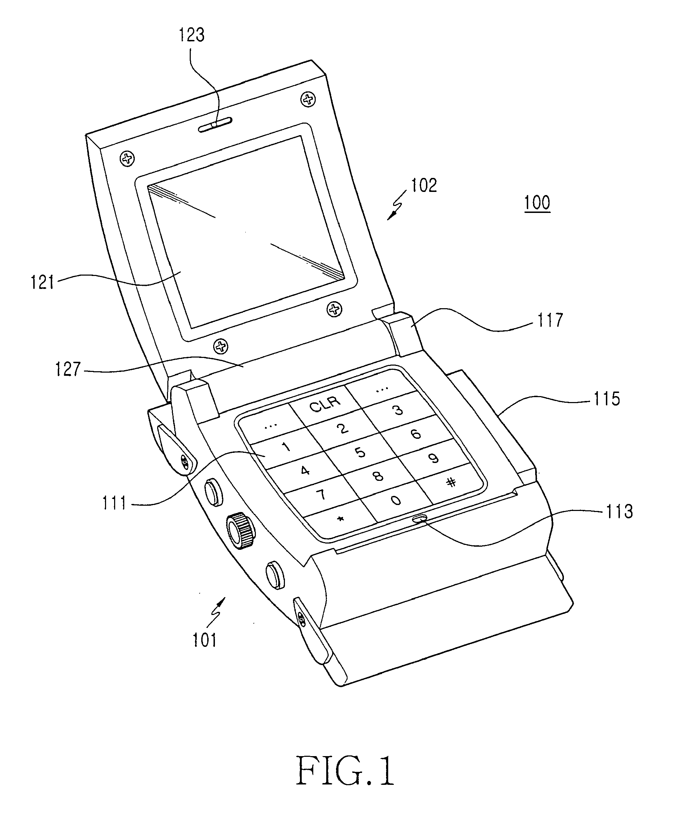

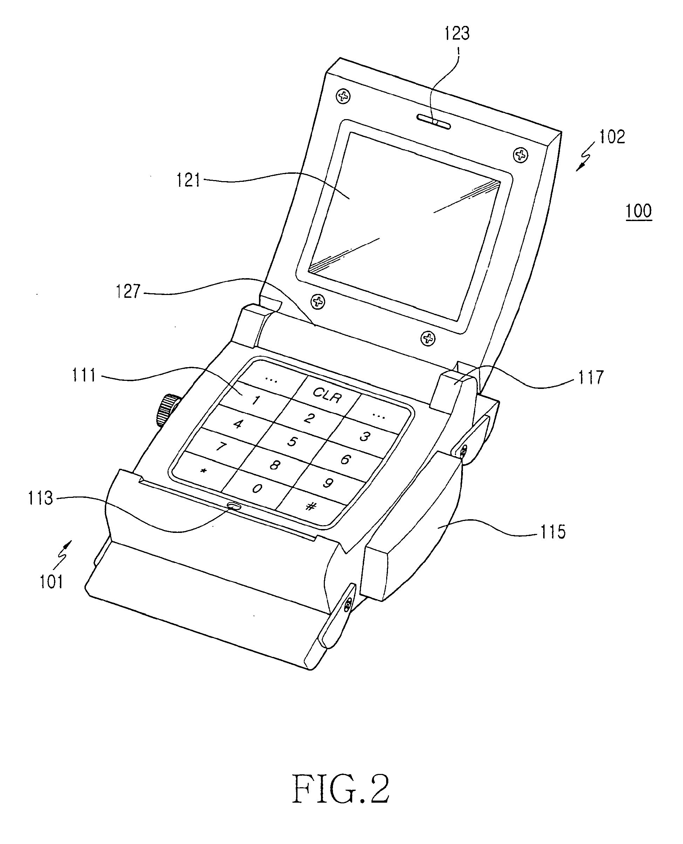

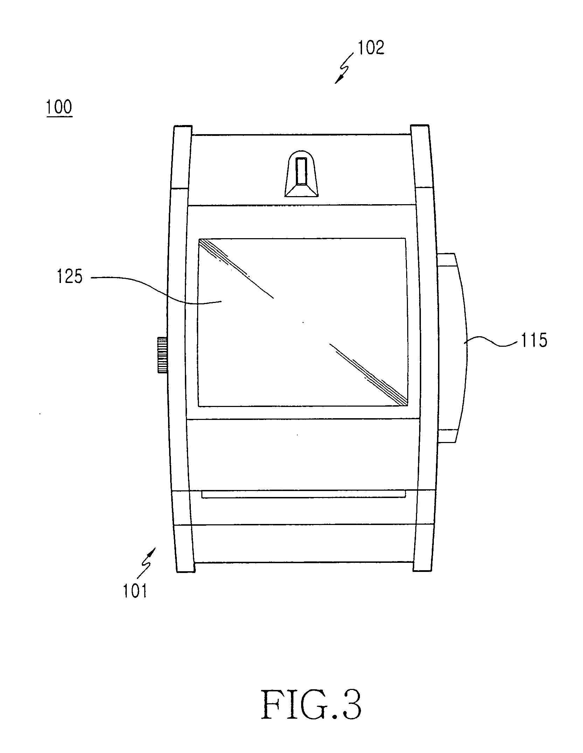

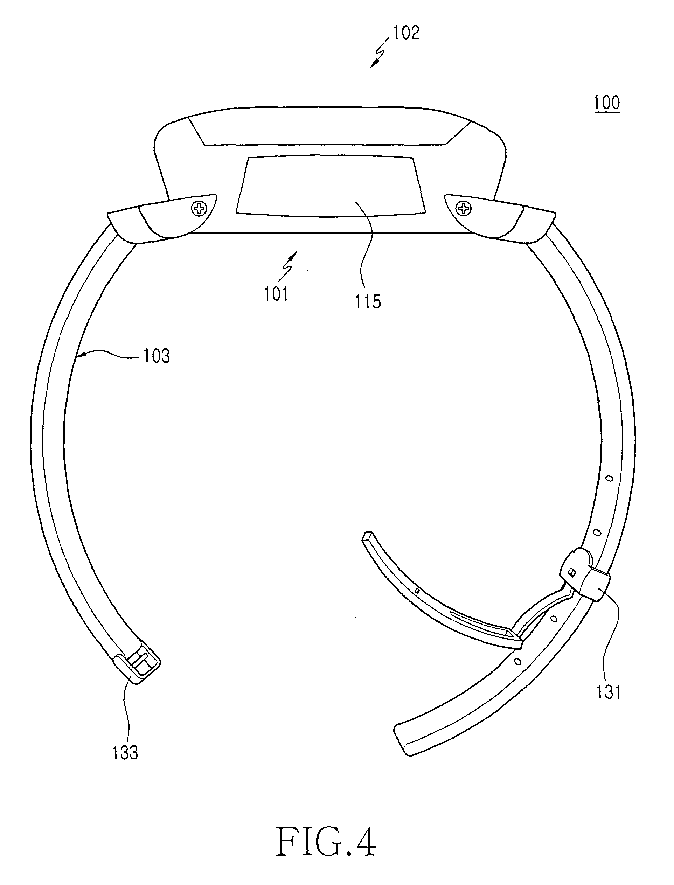

FIG. 1 is a perspective view illustrating an opened state of a watch-type portable terminal 100 according to an exemplary embodiment of the present invention. FIG. 2 is a perspective view of the watch-type portable terminal 100 of FIG. 1 viewed from the other side. FIG. 3 is a top plan view illustrating a closed state of the watch-type portable terminal 100 of FIG. 1. FIG. 4 is a side elevational view of the watch-type portable terminal 100 of FIG. 3. As illustrated in FIGs. 1 through 4, the portable terminal 100 includes a first housing 101, a second housing 102 that is rotatably connected to the first housing 101, and wrist bands 103 extending from ends of the first housing 101.

The first housing 101 includes a keypad 111 a transmitting unit (or mouthpiece) 113 in a face thereof, and an antenna device 115 at a side.

The keypad 111 includes, for example, a 3 x 4 array of keys for inputting numbers and characters and is used to input a telephone number or to transmit a short message. The keypad 111 may further include various function keys, such as a send key for calling a partner, an end key for blocking call connection with a partner, and a menu key for allowing the use of menus. The keypad 111 is opened or closed by rotation of the second housing 102 and may be manipulated in its opened state.

The transmitting unit 113 includes a microphone for delivering a user's voice to a partner through the portable terminal 100.

The antenna device 115 protrudes from a side of the first housing 101. The portable terminal 100 allows the user to communicate with the partner or provides wireless communication with a base station to the user through the antenna device 115.

The second housing 102 includes a first display device 121 and a receiving unit (or earpiece) 123 in a face thereof, and a second display device 125 in another face.

The first display device 121 is implemented with various forms of display devices, such as a Liquid Crystal Display (LCD) or a Thin Film Transistor (TFT), and displays terminal state information, data transmission/reception information, the contents of a received short message, and a value input by the manipulation of the keypad 111. The first display device 121 is opened or closed by rotation of the second housing 102 and the user may check information displayed on the first display device 121 by manipulating the keypad 111 in the opened state of the portable terminal 100.

The receiving unit 123 is installed adjacent to the first display device 121 in an upper portion of the second housing 102 and includes a speaker for outputting received voice or sound of a stored music file. By a combination of the transmitting unit 113 and the receiving unit 123, the user may also provide her/his voice through the transmitting unit 113 and be provided with the partner's voice through the receiving unit 123, thereby conducting voice communication with the partner.

The second display device 125 is a screen preferably in an opposite face from the first display device 121 and is exposed to the exterior of the portable terminal 100 at all times. Information that is not changed by the manipulation of the keypad 111, such as the current time, terminal state information, and data transmission/reception information, is displayed on the second display device 125. The second display device 125 is implemented with various forms of display devices, such as an LCD or a TFT.

The wrist bands 103 extend from both ends of the first housing 101 and include connectors 131 and 133 at their ends. When the user rests the portable terminal 100 on his/her wrist, the wrist bands 103 are in an opened state. When the user combines the connectors 131 and 133 with each other, the wrist bands 103 are worn on the user's body while surrounding the user's wrist.

To rotatably connect the second housing 102 and the first housing 101, a cylindrical center hinge arm 127 is disposed at an end of one of the first housing 101 and the second housing 102, and a pair of side hinge arms 117 facing each other are disposed at an end of the other one of the first housing 101 and the second housing 102. The side hinge arms 117 and the center hinge arm 127 are disposed on different housings. The center hinge arm 127 is rotatably connected between the side hinge arms 117, thereby allowing the second housing 102 to be rotatably connected to the first housing 101.

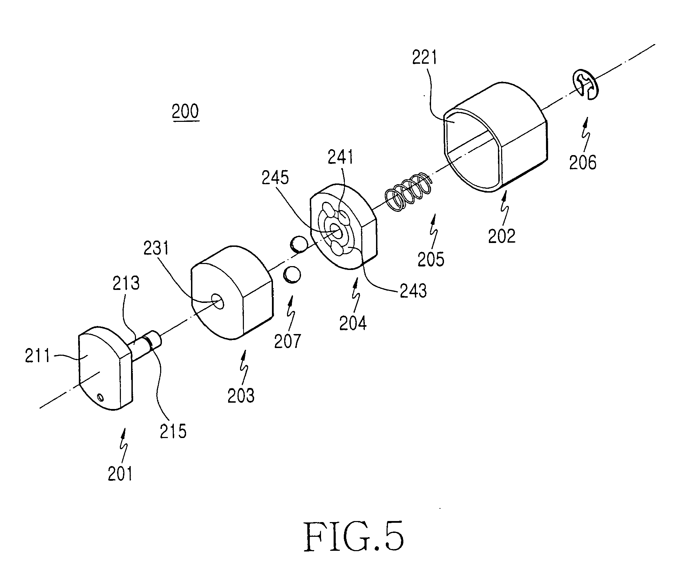

FIG. 5 is an exploded perspective view of a hinge device 200 of the watch-type portable terminal 100 of FIG. 1. As illustrated in FIG. 5, the hinge device 200 includes a supporter 201, a rotator 202, a hinge shaft 203, a hinge cam 204, a hinge spring 205, a C-ring 206, and hinge balls 207. The hinge device 200 is accommodated in one of the center hinge arm 127 and the side hinge arms 117. In an exemplary embodiment of the present invention, the supporter 201 is connected to one of the side hinge arms 117 and the rotator 202 is connected to the center hinge arm 127.

The supporter 201 includes a plate 211 and a substantially bar-shaped shaft 213 extending from a face of the plate 211. A ring-shaped groove 215 is formed along the external circumference of an end portion of the shaft 213. The supporter 201 is fixed to one of the side hinge arms 117 by the plate 211.

The rotator 202 has a cylindrical shape in which one end is opened and the other end is closed and is accommodated in the center hinge arm 127. A through hole (not shown) having the same diameter as the shaft 213 is formed at the other end of the rotator 202 and the shaft 213 is connected to the rotator 202 through the through hole while the ring-shaped groove 215 protruding externally of the rotator 202.

The hinge shaft 203 has a through hole 231 and is mounted on the shaft 213. One section of the hinge shaft 203 is supported by the plate 211, and thus the hinge shaft 203 is fixed to one of the side hinge arms 117.

The hinge cam 204 includes grooves 241 and a guide groove 243 passing by the grooves 241 and extending along the circumferential direction of a face. The face including the grooves 241 and the guide groove 243 faces the other face of the hinge shaft 203. The hinge cam 204 is defined within the rotator 202 and its rotation is limited. The hinge cam 204 includes a through hole 245 through which the hinge cam 204 is installed on the shaft 213 to move in a substantially straight line.

The hinge spring 205 winds the shaft 213 and is accommodated in the rotator 202. Thus, the shaft 213 is connected to the rotator 202 by passing through the plate 211, the hinge shaft 203, the hinge cam 204, and the hinge spring 205 sequentially. In the hinge spring 205, one end is supported by the other end of the hinge cam 204 and the other end is supported by the closed other end of the rotator 202. Thus, the hinge spring 205 provides elastic force in a direction that pushes the hinge cam 204 closely to the hinge shaft 203.

The C-ring 206 is engaged in the protruding ring-shaped groove 215 in a state where the shaft 213 is accommodated in the rotator 202 after passing through the hinge shaft 203, the hinge cam 204, and the hinge spring 205. Thus, the C-ring 206 defines the hinge shaft 203, the hinge cam 204, and the hinge spring 205 on the shaft 213 and the supporter 201 is defined within the rotator 202. As a result, the hinge device 200 forms a single module and is accommodated within the center hinge arm 217. At this time, the hinge device 200 may not require the rotator 202. If the rotator 202 is not provided, the hinge shaft 203, the hinge cam 204, and the hinge spring 205 are defined by the C-ring 206 while being combined with the shaft 213 of the supporter 201. The C-ring 206 supports the other end of the hinge spring 205.

The hinge balls 207 are fixed to the other face of the hinge shaft 203 to be disposed between the hinge shaft 203 and the hinge cam 204 and constitute at least one pair. When the second housing 102 rotates, the hinge balls 207 slide along the guide groove 243, rotate around the shaft 213, and may be engaged with the grooves 241. When the hinge balls 207 are engaged with the grooves 241, the second housing 102 maintains a stable still state. At this time, the rotation of the second housing 102 may be stopped and, if the hinge balls 207 are engaged with the grooves 241 in the still position of the second housing 102, the second housing 102 stably maintains its still state.

When the second housing 102 is connected to the first housing 101 and is opened and closed, the portable terminal 100 and the hinge device 200 operate as follows.

When the first housing 101 and the second housing 102 are folded together, the second display device 125 is exposed to the exterior of the portable terminal 100. In this state, the portable terminal 100 may receive another user's voice or short message while performing communications with a base station using the antenna device 115 and the user may check current time and terminal state information using the second display device 125.

In the hinge device 200, the hinge balls 207 are engaged with the grooves 241. Thus, the hinge shaft 203 and the hinge cam 204 are positioned closest to each other and the hinge spring 205 accumulates a minimum amount of elastic force. Thus, the second housing 102 is stably folded down onto the first housing 101.

When the first housing 101 1 and the second housing 102 are folded together and the user rotates the second housing 102, one face of each of the first housing 101 and the second housing 102 is exposed to outside. Thus, the user may manipulate the keypad 111 and check a value input by the manipulation of the keypad 111 through the first display device 121. When inputting a partner's telephone number or a short message using the keypad 111, the user may check an input value through the first display device 121. Moreover, when selecting a menu for using a function of the portable terminal 100, the user may manipulate the keypad 111 while checking an input value through the first display device 121.

When the first housing 101 and the second housing 102 are opened, the user may do voice communications with the partner through the transmitting unit 113 and the receiving unit 123.

When the second housing 102 starts to rotate, the supporter 201 and the hinge arm shaft 2043 of the hinge device 200 are fixed to the first housing 101. The rotator 202 and the hinge cam 204, together with the second housing 102, rotate with respect to the shaft 213. Thus, the hinge balls 207 deviate from the grooves 241 to move along the guide groove 243 and the hinge shaft 203 and the hinge cam 204 in their closest position become more distant. Because the hinge shaft 203 is supported by the plate 211, only the hinge cam 204 moves along the straight line. As a result, the hinge balls 207 deviate from the grooves 241 and are positioned on the guide groove 243, and thus the hinge spring 205 accumulates a maximum amount of elastic force.

When the second housing 102 rotates in a direction to be opened and forms an angle of approximately 120° with the first housing 101, and the hinge balls 207 are engaged with the grooves 241 by elastic force of the hinge spring 205, the hinge shaft 203 and the hinge cam 204 are positioned closest to each other again. Thus, the second housing 102 stably maintains its still state when forming an angle of approximately 120° with the first housing 101.

For the second housing 102 to continues rotating in a direction to be opened and to form an angle of approximately 160° with the first housing 101, the second housing 102 repeats an operation performed to form an angle of approximately 120° with the first housing 101 from its folded state.

The center hinge arm 127 is interfered with by the first housing 101 between the side hinge arms 117, thereby restricting rotation of the second housing 102. In an exemplary embodiment of the present invention, the rotation range of the second housing 102 is within approximately 160° and, when the second housing 102 forms an angle of approximately 160° with the first housing 101, the hinge balls 207 may be engaged with the grooves 241 to maintain the stable still state of the second housing 102.

A process in which the second housing 102 is folded down onto the first housing 101 to be closed is substantially inverse to a process in which the second housing 102 rotates to open the closed first housing 101.

As described above, the watch-type portable terminal according to exemplary embodiments of the present invention includes the hinge device to rotatably connect housings of the terminal and includes the display devices, the keypad, and the antenna device on both faces of the housings, thereby making it possible to diversify functions of the terminal.

While the present invention has been shown and described with reference to exemplary embodiments thereof, it will be understood by those skilled in the art that various changes in form and details may be made therein without departing from the spirit and scope of the invention.

## Claims

1. A watch-type portable terminal including a first housing and wrist bands extending from both ends of the first housing, comprising:
a second housing rotatably connected to the first housing in a direction to be folded downwardly or away from the first housing while facing the first housing; and
a display device disposed in at least one face of the second housing.

2. The watch-type portable terminal of claim 1, further comprising a keypad disposed in one face of the first housing, wherein the keypad is opened and closed by rotation of the second housing.

3. The watch-type portable terminal of claim 2, wherein the keypad includes a 3 x 4 array of keys.

4. The watch-type portable terminal of claim 1, wherein display devices are installed on both faces of the second housing to show screens in opposite directions to each other.

5. The watch-type portable terminal of claim 1, further comprising at least one antenna device mounted at a side of the first housing.

6. The watch-type portable terminal of claim 1, further comprising a transmitting unit installed on the first housing and including a microphone therein.

7. The watch-type portable terminal of claim 1, further comprising a receiving unit installed on the second housing and including a speaker phone therein.

8. The watch-type portable terminal of claim 1, further comprising connectors provided at ends of the wrist bands, wherein the wrist bands surround a user's wrist when the connectors are connected to each other.

9. The watch-type portable terminal of claim 1, further comprising:
a center hinge arm having a substantially cylindrical shape disposed at one end of one of the first and second housings; and
a pair of side hinge arms facing each other disposed at one end of the other one of the first and second housings,
wherein the center hinge arm is rotatably mounted between the pair of side hinge arms to allow the first and second housings to be connected to each other.

10. The watch-type portable terminal of claim 9, further comprising a hinge device having one end connected to one of the side hinge arms and that is accommodated within the center hinge arm.

11. The watch-type portable terminal of claim 10, wherein the hinge device comprises:
a supporter including a plate connected to one of the side hinge arms; and
a supporter including a shaft extending from a face of the plate;
a rotator accommodated within the center hinge arm and rotatably connected to the shaft.

12. The watch-type portable terminal of claim 11, further comprising:
a hinge shaft connected to one of the side hinge arms with the plate;
a hinge cam accommodated within the rotator and rotating while facing the hinge shaft; and
a hinge spring accommodated within the rotator and pushing the hinge cam closely to the hinge shaft.

13. The watch-type portable terminal of claim 12, wherein the shaft passes sequentially through the hinge shaft, the hinge cam, and then the hinge spring.

14. The watch-type portable terminal of claim 13, further comprising a ring-shaped groove along an external circumference of an end portion of the shaft and the hinge shaft, the hinge cam and the hinge spring are retained on the shaft by engaging a C-ring with the ring-shaped groove.

15. The watch-type portable terminal of claim 12, further comprising a ring-shaped groove along an external circumference of an end portion of the shaft and a C-ring engaged with the ring-shaped groove, wherein the ring-shaped groove protrudes from the rotator and the shaft is defined within the rotator by the engagement of the C-ring with the ring-shaped groove.

16. The watch-type portable terminal of claim 12, wherein the hinge cam is disposed within the rotator to restrict rotation of the hinge cam, and the hinge cam moves along a straight line on the shaft.

17. The watch-type portable terminal of claim 10, further comprising:
a supporter including a plate connected to one of the side hinge arms; and
a supporter including a shaft extending from a face of the plate;
a hinge shaft connected to one of the side hinge arms with the plate;
a hinge cam accommodated within the rotator and rotating while facing the hinge shaft;
a hinge spring accommodated within the rotator and pushing the hinge cam closely to the hinge shaft; and
a C-ring engaged with the ring-shaped groove,
wherein one end of the hinge spring is supported by the other end of the hinge cam and the other end of the hinge spring is supported by one face of the C-ring to allow the hinge spring to provide elastic force in a direction to push the hinge cam closely to the hinge shaft.

18. The watch-type portable terminal of claim 12, wherein the hinge device further comprises:
at least one pair of hinge balls disposed between the hinge shaft and the hinge cam; and
a plurality of grooves formed on opposite faces of the hinge shaft and the hinge cam,
wherein the hinge balls are selectively engaged with the plurality of grooves by rotation of the hinge cam.

19. The watch-type portable terminal of claim 18, further comprising a guide groove passing by the plurality of grooves and extending along the circumferential direction in the opposite faces of the hinge shaft and the hinge cam, wherein the hinge balls move along the guide groove by rotation of the hinge cam.

20. The watch-type portable terminal of claim 12, wherein one section of the hinge shaft is supported by the plate of the supporter.

21. A watch-type portable terminal, comprising
a first housing;
wrist bands extending from both ends of the first housing;
a second housing rotatably connected to the first housing and rotatable between a first closed position and a second open position;
a first display device disposed in at least one face of the second housing;
a keypad disposed on a face of the first housing; and
an antenna device connected to the first housing.

22. The watch-type portable terminal of claim 21, wherein the keypad is covered by the second housing when the second housing is in the first closed position and the keypad is accessible when the second housing is in the second open position.

23. The watch-type portable terminal of claim 21, wherein a second display devices is disposed in an opposite face of the second housing such that the first and second display devices are opposite to each other.
